# EUROPEAN PATENT SPECIFICATION

(11) **EP 4 570 999 B1**
(45) Date of publication and mention of the grant of the patent: **01.04.2026**
(21) Application number: 24157880.6
(22) Date of filing: 15.02.2024
(51) Int. Cl.: E03D 5/10, G01S 7/481, G01S 17/04, E03D 11/13

(54) **ADJUSTABLE STRUCTURE OF A FOOT SENSOR SENSING DISTANCE**
EINSTELLBARE STRUKTUR EINES EINEN ABSTAND MESSENDEN FUSSSENSORS
STRUCTURE RÉGLABLE D'UN CAPTEUR DE PIED DÉTECTANT UNE DISTANCE

(30) Priority: 13.12.2023 CN 202323402410 U
(43) Date of publication of application: 18.06.2025
(73) Proprietor: Geberit International AG, 8645 Jona (CH)
(72) Inventor: DAI, Cong, Shanghai, 201802 (CN); HE, Feng, Shanghai, 201802 (CN)
(74) Representative: Szynka Smorodin Patentanwälte Partnerschaft mbB

(56) References cited:
- EP-A1- 1 770 839
- EP-A2- 0 037 896
- CN-U- 212 104 383
- US-A1- 2018 209 826

## Description

### Field of the Invention

The invention relates to a sensor fitting, in particular to a position adjustable mounting structure of a sensor.

### Background of the Invention

Conventionally, a foot detection sensor can be disposed on a sanitary ware, such as a toilet or a urinal, for detecting downwardly whether a human foot is standing in the vicinity, so as to activate a corresponding intelligent accessory of the toilet or the urinal, such as opening the toilet cover and starting the heating device. However, the structure of the foot sensor is relatively fixed, as is its downward detectable range. Thus, a too high finished floor level at the user's site can lead to a low mounting position of the foot sensor, which results for example in the emission of a detection signal directly onto the finished floor level. For example, a foot laser sensor in this state would receive a direct reflection from the finished floor level, causing the actuator to be triggered continuously and not be able to accurately sense the presence or absence of a foot. Likewise, a too low finish floor level at the user's site can lead to a high mounting position of the foot sensor, which results in the emitted laser being too far away from the finish floor level and the laser blind area being too large. As a result, the actuator cannot be triggered when the user triggers the function with the foot.

It is necessary to adjust the position of the foot sensor on the toilet to cope with different finish floor levels. However, currently available foot sensors are disposed directly in the void of the sanitary ware without any adjustment structure.

EP1770839A1 discloses a sensor mounting mechanism comprises a housing having snapping mechanisms. The snapping mechanism allows the housing portion to couple to a supporting structure, asensor and an additional portion of the sensor. The housing has a stem portion and a flange portion, extending from the stem portion. The housing is positioned onto the supporting structure by passing the stem portion through an orifice in the supporting structure until the flange portion abuts the supporting structure.

### Summary of the invention

The invention aims at providing an improved adjustable mounting structure for a foot sensor. To solve this problem, the present application provides an adjustable mounting structure for a foot detection sensor along claim 1.

Preferred embodiments are defined in the dependent claims.

In some embodiments, the adapter sleeve is made of a rigid material, such as a metal, a ceramic or a polymeric material.

In some embodiments, the outer edge of the panel is provided with positioning pieces for adapting to the mounting hole of the sanitary ware.

When in use, the foot sensor can be fixed in the adapter sleeve, the foot sensor with the adapter sleeve extending into the desired position in the cylinder portion of the mounting frame. Then the snap ring can be sleeved over the cylinder portion to drive the claws on the cylinder portion to shift inward from the first position to the second position. Then, the snap ring can be rotated to shift the claws to the third position, thus firmly gripping the cylinder portion and the adapter sleeve. When subsequent adjustments are required, the reverse operation can be performed.

Beneficial effects of the invention include: the height of the foot sensor in the mounting hole of the sanitary ware can be adjusted up and down according to the user's actual finished floor level, so as to adjust the distance between the foot sensor and the finished floor; the at least two fixing segments of the snap ring can make the mounting fast and firm.

### Brief Description of the Drawings

Other objects, features, and advantages of the invention will become apparent from the following detailed description of the preferred but non-limiting embodiment. The description is made with reference to the accompanying drawings, in which:
- FIG. 1: shows a schematic diagram of an adjustable mounting structure of a foot sensor according to the present application;
- FIG. 2: shows a three-dimensional schematic diagram of a mounting frame of the adjustable mounting structure according to the present application;
- FIG. 3: shows a bottom view schematic diagram of the mounting frame of the adjustable mounting structure according to the present application;
- FIG. 4: shows a side view schematic diagram of a first viewing angle of the mounting frame of the adjustable mounting structure according to the present application;
- FIG. 5: shows side view schematic diagram of a second viewing angle of the mounting frame of the adjustable mounting structure according to the present application;
- FIG. 6: shows a three-dimensional schematic diagram of an adapter sleeve combined with a sensor in the adjustable mounting structure according to the present application;
- FIG. 7: shows a side view schematic diagram of the adapter sleeve combined with the sensor in the adjustable mounting structure according to the present application;
- FIG. 8: shows a bottom view schematic diagram of the adapter sleeve combined with the sensor in the adjustable mounting structure according to the present application;
- FIG. 9: shows a three-dimensional schematic diagram of a snap ring of the adjustable mounting structure according to the present application;
- FIG. 10: shows a bottom view schematic diagram of the snap ring of the adjustable mounting structure according to the present application;
- FIG. 11: shows a side view schematic diagram of the snap ring of the adjustable mounting structure according to the present application;
- FIG. 12: shows a schematic diagram of a deflection of a snap claw of the adjustable mounting structure according to the present application;

### Detailed Description of the Preferred Embodiments

The invention will be further described in detail with the help of attached drawings.

Other embodiments of the invention will be apparent to those skilled in the art from consideration of the specification of the invention disclosed herein.

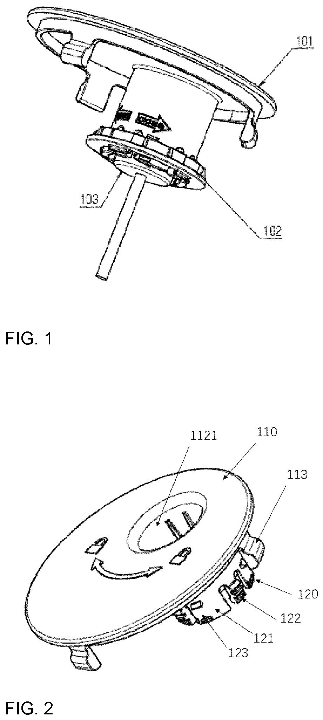

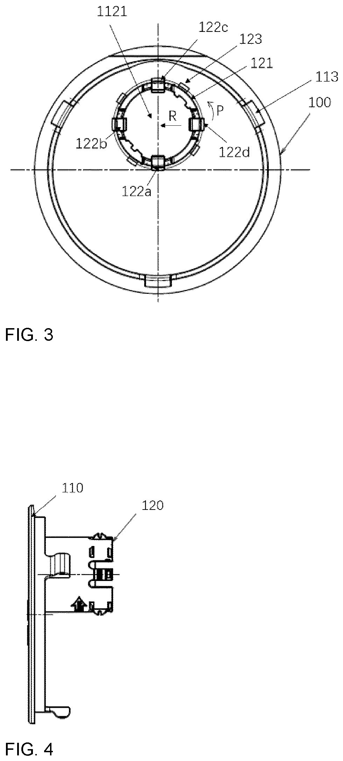

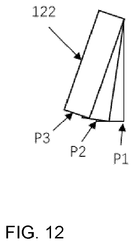

Referring to FIG. 1, FIG. 2, FIG. 3, FIG. 4, FIG. 5 and FIG. 12, an embodiment of the present application provides an adjustable mounting structure of a foot sensor, comprising a mounting frame 100, a snap ring 200 and an adapter sleeve 300; wherein the mounting frame 100 has a cylinder portion 120 matched with the adapter sleeve 300, and a wall 121 of the cylinder portion 120 is provided with four radially inwardly deflectable claws 122, and the claws 122 are configured to be in a first position **P1** when not deflected. The adapter sleeve 300 at least partially extends into the cylinder portion 120, and the sensing distance of the sensor 400 connected to the adapter sleeve is adjusted by the position of the adapter sleeve extending into the cylinder portion 120. **It** should be understood that the number of claws 122 can be more or less as long as radial deflection can be achieved to clamp the adapter sleeve 300. For example, the number of claws can be one, two, three, four, five or six.

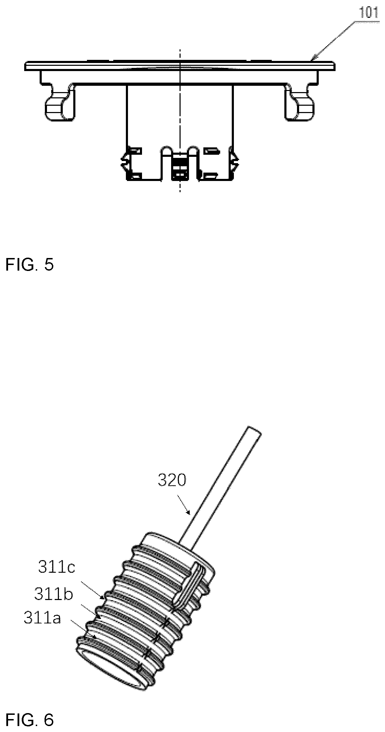

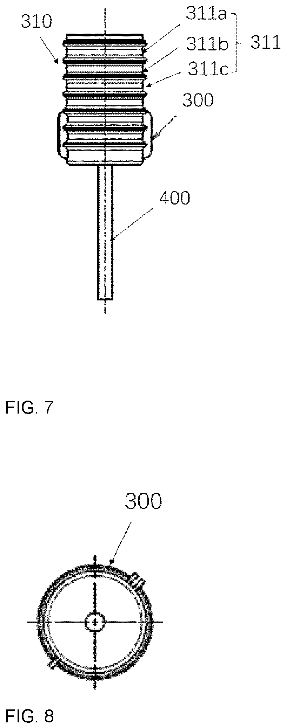

As shown in FIG. 6, FIG. 7 and FIG. 8, the adapter sleeve 300 is substantially cylindrical in shape and is sleeved around the body of the sensor 400, and the rod of the sensor 400 is exposed from the adapter sleeve 300. The adapter sleeve 300 includes a plurality of circumferential grooves 311 disposed in the axial direction, such as the illustrated circumferential grooves 311a, 311b, 311c and 311d. These circumferential grooves 311 engage the claws 122 on the cylinder portion 120 of the mounting frame 100, so that the adapter sleeve 300 is engaged with the mounting frame 100. The snap ring 200 is fitted on the outer side of the cylinder portion 120, and the adapter sleeve 300 is engaged with the mounting frame 100 by deflecting the claws 122 radially inward.

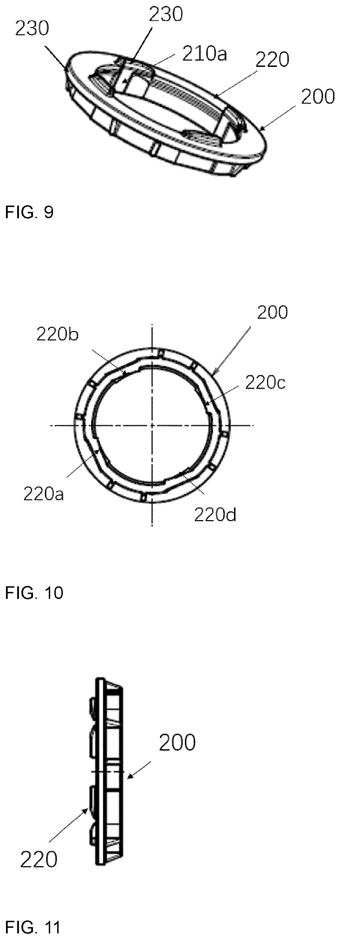

As shown in FIG. 9, FIG. 10 and FIG. 11, the snap ring 200 may have four first snap-in portions 210a and 210b (only two first snap-in portions are shown in FIG. 9) and four second snap-in portions 220a, 220b, 220c and 220d corresponding to the number of claws, and one first snap-in portion and one second snap-in portion are disposed adjacent to each other. Taking the first snap-in portion 210a and the second snap-in portion 220a as examples, when the first snap-in portion 210a of the snap ring is engaged with its corresponding claw 122a, the claw 122 deflects inward to the second position P2 along the radial direction R, and continues to deflect inward to the third position P3 when the claw is engaged with the second snap-in portion 220a. In this process, the claw 122a at the second position P2 at least partially enters one of the circumferential grooves 311 of the adapter sleeve 300, thereby limiting the axial L movement of the cylinder portion 120 and the adapter sleeve 300. At the third position, the claw 122a closely cooperates with the circumferential groove 311 of the adapter sleeve 300, thereby further limiting the circumferential P movement of the cylinder portion 120 and the adapter sleeve 300.

The cylinder portion 120 can be made of an elastic material, such as polyethylene and polyurethane and other synthetic material. The claws 122 are connected to the wall 121 at one end and are cantilevered at the cylinder portion 120.

The first snap-in portion 210a is a groove provided on the inner surface of the snap ring, and as shown in FIG. 9, the groove is provided on the body of the snap ring, the depth of which is formed to enable the claw to shift to the second position P2. The second snap-in portion 220a is an arc surface disposed on the inner surface of the snap ring, and the radius of curvature of the arc surface is smaller than that of the circle with the inner surface of the snap ring, so that the arc surface can drive the claws to continue to move radially inward to the third position P3. In some embodiments, a limiting abutment stop 230 is disposed on one side of the groove that matches first with the claws to prevent the claws from detaching from the groove due to axial movement.

It should be understood that the first snap-in portion and the second snap-in portion can be consecutively disposed on the inner surface of the snap ring, or disposed at intervals, that is, with gaps there between.

To limit the position of the snap ring 200 on the cylinder portion 120 in the axial direction **L,** a pair of protrusions 123, which can be wedge-shaped or otherwise shaped protrusions, is also disposed on the outer surface of the wall 121 of the cylinder portion 120 at the position corresponding to the claws, and the protrusions cooperate with the outer edge 240 of the snap ring to limit the axial movement of the snap ring.

It should be understood that the plurality of circumferential grooves 311 of the adapter sleeve 300 may be disposed in parallel with each other or at an angle. The adapter sleeve 300 may be made of a rigid material, such as a metal, a ceramic or a polymer material, or may be made of a flexible material, such as silica gel, rubber or other synthetic material.

The mounting frame can also be used as a mounting hole cover plate of the sanitary ware. To this end, the mounting frame 100 may include a panel 110 extending radially outward from the wall 121 of the cylinder portion 120, and there may be an opening 1121 at the position of the panel 110 corresponding to the cylinder portion 120, and the opening may be provided with a cover plate made of light-transmitting material, thereby allowing the sensor to project detection light, such as laser or infrared light, and receive reflection. Moreover, the outer edge 112 of the panel 110 can be provided with a positioning piece 113 for fitting, such as clamping, inside the mounting hole of a sanitary ware.

The working principle of the adjusting structure is as follows: when in use, the foot sensor 400 is fixed in the adapter sleeve 300, the foot sensor with the adapter sleeve 300 is extended into a desired position in the cylinder portion 120 of the mounting frame 100, and then the snap ring 200 is sleeved over the cylinder portion 120, so that the first snap-in portion engages the claw 122 and drives the claws 122 to shift inward from the first position P1 to the second position P2. Then, the snap ring 200 is rotated, so that the second snap-in portion continues to drive the claws 122 to shift to the third position P3, thereby firmly clamping the cylinder portion 120 and the adapter sleeve 300 in place. When subsequent adjustments are required, the reverse operation can be performed to release the snap ring and make the adjustment.

Sensors suitable for the structure of the present application are, for example, laser sensors or infrared sensors.

It should be understood that the present invention is not limited to the precise structure described above and illustrated in the drawings, and various modifications and alterations can be made without departing from the scope of the disclosure. The invention is defined by the appended claims.

## Claims

1. An adjustable structure for mounting a foot detection sensor (400), comprising:
a mounting frame (100) having a cylinder portion (120), into which cylinder portion (120) fits an adapter sleeve (300), wherein a wall (121) of the cylinder portion (120) has at least one radially inwardly deflectable claw (122);
the adapter sleeve (300) being adapted to at least partially extend into the cylinder portion (120), wherein the adapter sleeve (300) comprises a plurality of circumferential grooves (311) disposed in the axial direction; and a snap ring (200) being provided and adapted to be fitted on the outer side of the cylinder portion (120), wherein the snap ring (200) has a first snap-in portion (210a, b) and a second snap-in portion (220a-d) for each of the claws (122); the claws (122) being configured to be in a first position (P1) when not deflected, to deflect radially inward into a second position (P2) when being fitted with the respective first snap-in portion (210a, b) of the snap ring (200), and to continue to deflect radially inward into a third position (P3) when being fitted with the respective second snap-in portion (220a-d) of the snap ring (200);
wherein, in the second position (P2), the at least one claw (122) at least partially engages into one of the circumferential grooves (311) of the adapter sleeve (300), thereby limiting a relative axial movement of the cylinder portion (120) and the adapter sleeve (300), and, in the third position (P3), the at least one claw (122) fits closely to the circumferential groove (311) of the adapter sleeve (300), thereby additionally limiting a circumferential movement of the cylinder portion (120) and the adapter sleeve (300).

2. An adjustable structure according to claim 1, wherein the at least one claw (122) is connected to the wall (121) of the cylinder portion (120) at one end thereof, and is cantilevered, thus.

3. An adjustable structure according to claim 1 or 2, wherein the first snap-in portion (210a, b) of the snap ring (200) is a groove disposed on an inner surface of the snap ring (200), and a limiting abutment stop (230) is disposed on one side of the groove that matches first with the claw (122) to prevent the claw (122) from detaching from the groove due to an axial movement.

4. An adjustable structure according to one of the preceding claims, wherein the second snap-in portion (220a-d) of the snap ring (200) is an arc surface disposed on an inner surface of the snap ring (200), and the radius of curvature of the arc surface is smaller than a radius of curvature of a circular portion of the inner surface of the snap ring (200).

5. An adjustable structure according to one of the preceding claims, wherein the first snap-in portion (210a, b) and the second snap-in portion (220a-d) are disposed consecutively on an inner surface of the snap ring (200).

6. An adjustable structure according to one of the preceding claims, wherein an outer surface of the wall (121) of the cylinder portion (120) is further provided with a pair of protrusions (123) at the axial position of the at least one claw (122), and the pair of protrusions (123) is configured to limit an outer edge (240) of the snap ring (200) in the axial direction.

7. An adjustable structure according to one of the preceding claims, wherein the plurality of circumferential grooves 311 of the adapter sleeve (300) are disposed in parallel to each other.

8. An adjustable structure according to one of the preceding claims, wherein the adapter sleeve (300) is made of a rigid material.

9. An adjustable structure according to one of the preceding claims, wherein the mounting frame (100) further comprises a panel (110) extending radially outward from the wall (121) of the cylinder portion (120), and a cover plate made of light-transmitting material is provided in or on the panel (110) at a position corresponding to the cylinder portion (120).

10. An adjustable structure according to claim 9, wherein an outer edge (112) of the panel **(110)** is provided with positioning pieces (113).

11. An adjustable structure according to one of the preceding claims in combination with a foot detection sensor (400), in particular a laser sensor or an infrared sensor.

12. A sanitary device, in particular a toilet or a urinal, comprising an adjustable structure according to one of claims 1 to 10 or a combination thereof with a foot detection sensor (400) according to claim 11.

13. A use of an adjustable structure according to one of claims 1 to 10 or a combination thereof with a foot detection sensor (400) according to claim 11 for a sanitary device, in particular a toilet or a urinal.

## Patentansprüche

1. Einstellbare Struktur zum Montieren eines Fußerfassungssensors (400), umfassend:
einen Montagerahmen (100) mit einem Zylinderabschnitt (120), wobei in den Zylinderabschnitt (120) eine Adapterhülse (300) passt, wobei eine Wand (121) des Zylinderabschnitts (120) mindestens eine radial nach innen auslenkbare Klaue (122) aufweist;
wobei die Adapterhülse (300) dazu eingerichtet ist, sich zumindest teilweise in den Zylinderabschnitt (120) zu erstrecken, wobei die Adapterhülse (300) eine Vielzahl von Umfangsnuten (311) umfasst, die in der Axialrichtung angeordnet sind; und einen Sicherungsring (200), der bereitgestellt und dazu eingerichtet ist, um an der Außenseite des Zylinderabschnitts (120) eingepasst zu werden, wobei der Sicherungsring (200) einen ersten Einrastabschnitt (210a, b) und einen zweiten Einrastabschnitt (220a-d) für jede der Klauen (122) aufweist; wobei die Klauen (122) dazu eingerichtet sind, um sich in einer ersten Position (P1) zu befinden, wenn sie nicht ausgelenkt sind, um sich radial nach innen in eine zweite Position (P2) auszulenken, wenn sie mit dem jeweiligen ersten Einrastabschnitt (210a, b) des Sicherungsrings (200) eingepasst sind, und um sich weiter radial nach innen in eine dritte Position (P3) auszulenken, wenn sie mit dem jeweiligen zweiten Einrastabschnitt (220a-d) des Sicherungsrings (200) eingepasst sind;
wobei in der zweiten Position (P2) die mindestens eine Klaue (122) zumindest teilweise in eine der Umfangsnuten (311) der Adapterhülse (300) eingreift, wodurch eine relative Axialbewegung des Zylinderabschnitts (120) und der Adapterhülse (300) begrenzt wird, und in der dritten Position (P3) die mindestens eine Klaue (122) eng an die Umfangsnut (311) der Adapterhülse (300) passt, wodurch zusätzlich eine Umfangsbewegung des Zylinderabschnitts (120) und der Adapterhülse (300) begrenzt wird.

2. Einstellbare Struktur nach Anspruch 1, wobei die mindestens eine Klaue (122) mit der Wand (121) des Zylinderabschnitts (120) an einem Ende davon verbunden ist und somit freitragend ist.

3. Einstellbare Struktur nach Anspruch 1 oder 2, wobei der erste Einrastabschnitt (210a, b) des Sicherungsrings (200) eine Nut ist, die an einer Innenfläche des Sicherungsrings (200) angeordnet ist, und ein Begrenzungsanschlag (230) an einer Seite der Nut angeordnet ist, die zuerst mit der Klaue (122) zusammenpasst, um zu verhindern, dass sich die Klaue (122) aufgrund einer Axialbewegung von der Nut löst.

4. Einstellbare Struktur nach einem der vorhergehenden Ansprüche, wobei der zweite Einrastabschnitt (220a-d) des Sicherungsrings (200) eine Bogenfläche ist, die an einer Innenfläche des Sicherungsrings (200) angeordnet ist, und der Krümmungsradius der Bogenfläche kleiner als ein Krümmungsradius eines kreisförmigen Abschnitts der Innenfläche des Sicherungsrings (200) ist.

5. Einstellbare Struktur nach einem der vorhergehenden Ansprüche, wobei der erste Einrastabschnitt (210a, b) und der zweite Einrastabschnitt (220a-d) nacheinander an einer Innenfläche des Sicherungsrings (200) angeordnet sind.

6. Einstellbare Struktur nach einem der vorhergehenden Ansprüche, wobei eine Außenfläche der Wand (121) des Zylinderabschnitts (120) ferner mit einem Paar von Vorsprüngen (123) an der axialen Position der mindestens einen Klaue (122) versehen ist, und das Paar von Vorsprüngen (123) dazu eingerichtet ist, um eine Außenkante (240) des Sicherungsrings (200) in der Axialrichtung zu begrenzen.

7. Einstellbare Struktur nach einem der vorhergehenden Ansprüche, wobei die mehreren Umfangsnuten (311) der Adapterhülse (300) parallel zueinander angeordnet sind.

8. Einstellbare Struktur nach einem der vorhergehenden Ansprüche, wobei die Adapterhülse (300) aus einem starren Material hergestellt ist.

9. Einstellbare Struktur nach einem der vorhergehenden Ansprüche, wobei der Montagerahmen (100) ferner ein Panel (110) umfasst, das sich von der Wand (121) des Zylinderabschnitts (120) radial nach außen erstreckt, und eine Abdeckplatte, die aus lichtdurchlässigem Material hergestellt ist, in oder an dem Panel (110) an einer Position vorgesehen ist, die dem Zylinderabschnitt (120) entspricht.

10. Einstellbare Struktur nach Anspruch 9, wobei eine Außenkante (112) des Panels (110) mit Positionierungsstücken (113) versehen ist.

11. Einstellbare Struktur nach einem der vorhergehenden Ansprüche in Kombination mit einem Fußerfassungssensor (400), insbesondere einem Lasersensor oder einem Infrarotsensor.

12. Sanitärgegenstand, insbesondere eine Toilette oder ein Urinal, umfassend eine einstellbare Struktur nach einem der Ansprüche 1 bis 10 oder eine Kombination davon mit einem Fußerfassungssensor (400) nach Anspruch 11.

13. Verwendung einer einstellbaren Struktur nach einem der Ansprüche 1 bis 10 oder einer Kombination davon mit einem Fußerfassungssensor (400) nach Anspruch 11 für einen Sanitärgegenstand, insbesondere eine Toilette oder ein Urinal.

## Revendications

1. Structure réglable pour monter un capteur de détection de pied (400), comprenant :
un cadre de montage (100) ayant une partie cylindrique (120), la partie cylindrique (120) dans laquelle s'ajuste un manchon adaptateur (300), une paroi (121) de la partie cylindrique (120) ayant au moins une griffe (122) pouvant être déviée radialement vers l'intérieur ;
le manchon adaptateur (300) étant configuré pour s'étendre au moins partiellement dans la partie cylindrique (120), le manchon adaptateur (300) comprenant une pluralité de rainures circonférentielles (311) agencées dans la direction axiale ; et une bague de retenue (200) prévue et configurée pour être ajustée sur l'extérieur de la partie cylindrique (120), la bague de retenue (200) ayant une première partie d'encliquetage (210a, b) et une deuxième partie d'encliquetage (220a-d) pour chacune des griffes (122) ; les griffes (122) étant configurées pour être dans une première position (P1) lorsqu'elles ne sont pas déviées, pour dévier radialement vers l'intérieur dans une deuxième position (P2) lorsqu'elles sont ajustées avec la première partie d'encliquetage (210a, b) respective de la bague de retenue (200), et pour dévier davantage radialement vers l'intérieur dans une troisième position (P3) lorsqu'elles sont ajustées avec la deuxième partie d'encliquetage (220a-d) respective de la bague de retenue (200) ;
dans la deuxième position (P2), l'au moins une griffe (122) s'engageant au moins partiellement dans l'une des rainures circonférentielles (311) du manchon adaptateur (300), limitant ainsi un mouvement axial relatif de la partie cylindrique (120) et du manchon adaptateur (300), et dans la troisième position (P3), l'au moins une griffe (122) s'ajustant étroitement à la rainure circonférentielle (311) du manchon adaptateur (300), limitant ainsi en outre un mouvement circonférentiel de la partie cylindrique (120) et du manchon adaptateur (300).

2. Structure réglable selon la revendication 1, dans laquelle l'au moins une griffe (122) est reliée à la paroi (121) de la partie cylindrique (120) à une extrémité de celle-ci et est ainsi en porte-à-faux.

3. Structure réglable selon la revendication 1 ou 2, dans laquelle la première partie d'encliquetage (210a, b) de la bague de retenue (200) est une rainure agencée sur une surface interne de la bague de retenue (200), et une butée de limitation (230) est agencée sur un côté de la rainure qui s'ajuste d'abord avec la griffe (122) pour empêcher la griffe (122) de se dégager de la rainure en raison d'un mouvement axial.

4. Structure réglable selon l'une quelconque des revendications précédentes, dans laquelle la deuxième partie d'encliquetage (220a-d) de la bague de retenue (200) est une surface arquée agencée sur une surface interne de la bague de retenue (200), et le rayon de courbure de la surface arquée est inférieur à un rayon de courbure d'une partie circulaire de la surface interne de la bague de retenue (200).

5. Structure réglable selon l'une quelconque des revendications précédentes, dans laquelle la première partie d'encliquetage (210a, b) et la deuxième partie d'encliquetage (220a-d) sont agencées séquentiellement sur une surface interne de la bague de retenue (200).

6. Structure réglable selon l'une quelconque des revendications précédentes, dans laquelle une surface externe de la paroi (121) de la partie cylindrique (120) est en outre pourvue d'une paire de saillies (123) à la position axiale de l'au moins une griffe (122), et la paire de saillies (123) est configurée pour limiter un bord externe (240) de la bague de retenue (200) dans la direction axiale.

7. Structure réglable selon l'une quelconque des revendications précédentes, dans laquelle la pluralité de rainures circonférentielles (311) du manchon adaptateur (300) sont agencées parallèlement les unes aux autres.

8. Structure réglable selon l'une quelconque des revendications précédentes, dans laquelle le manchon adaptateur (300) est constitué d'un matériau rigide.

9. Structure réglable selon l'une quelconque des revendications précédentes, dans laquelle le cadre de montage (100) comprend en outre un panneau (110) s'étendant radialement vers l'extérieur à partir de la paroi (121) de la partie cylindrique (120), et une plaque de recouvrement constituée d'un matériau translucide est prévue dans ou sur le panneau (110) à une position correspondant à la partie cylindrique (120).

10. Structure réglable selon la revendication 9, dans laquelle un bord externe (112) du panneau (110) est pourvu de pièces de positionnement (113).

11. Structure réglable selon l'une quelconque des revendications précédentes, en combinaison avec un capteur de détection de pied (400), en particulier un capteur laser ou un capteur infrarouge.

12. Article sanitaire, en particulier des toilettes ou un urinoir, comprenant une structure réglable selon l'une quelconque des revendications 1 à 10 ou une combinaison de celles-ci avec un capteur de détection de pied (400) selon la revendication 11.

13. Utilisation d'une structure réglable selon l'une quelconque des revendications 1 à 10 ou d'une combinaison de celles-ci avec un capteur de détection de pied (400) selon la revendication 11 pour un article sanitaire, en particulier des toilettes ou un urinoir.
